# EUROPEAN PATENT APPLICATION

(11) **EP 2 762 376 A1**
(43) Date of publication of application: **06.08.2014**
(21) Application number: 13154919.8
(22) Date of filing: 12.02.2013
(51) Int. Cl.: B61D 7/32

(54) **Arrangement intended to be used for the unloading of goods**

(30) Priority: 30.01.2013 SE 1350103
(71) Applicant: LUOSSAVAARA-KIIRUNAVAARA AB, 971 28 Lulea (SE)
(72) Inventor: Åström, Björn, 98137 Kiruna (SE); Finn, Jonas, 981 37 Kiruna (SE); Löfgren, Sven, 113 57 Stockholm (SE)
(74) Representative: Norman, Pia Christiane

(57) **Abstract**

This invention concerns an arrangement 1 to be used for the unloading of goods that are transported in a truck 2 that is emptied through at least one opening 3 in the truck 2. The arrangement 1 comprises at least one unit 5 that creates vibration and that acts on the truck 2.

## Description

### Technical area

This invention concerns an arrangement to be used for the unloading of goods that are transported in a truck that is emptied through at least one opening in the truck.

### Background

The transport of goods in trucks of various types is previously known. The goods can be removed from the trucks in various ways through one or several openings in the truck. The opening is normally closed by a door construction during transport. The trucks pass through some form of unloading area, an unloading terminal, where the relevant door is opened and the goods in the truck pass through the opening and out from the truck.

Certain goods tend to be difficult to unload, since the tendency of the goods to fall down and out through the opening may be limited due to adhesion from various causes, for example duration of transport, temperature, or similar. Where necessary, some form of percussive arrangement or tool is used, often hand-held, that impacts the truck in order to beat the material out, to break the material free that has become attached to the sides of the truck.

The unloading sequence is then terminated by the truck passing a closure frame that closes the doors.

The work of unloading may be preceded or may comprise heating of the trucks in order to remove ice that has formed on the truck and that prevents opening of the door, in the case in which the transport has taken place in, for example, rainy, snowy and cold weather. Other cleaning may be comprised in the same manner.

### Description of the invention

One purpose of the invention is to offer an arrangement that facilitates the unloading of goods that are transported in trucks and that are emptied through at least one opening in the truck such that it becomes possible to achieve fully empty and clean trucks, truck cars, after the unloading has been completed. The unloading by an arrangement according to the invention entails also unloading with a lower consumption of energy and with shorter unloading times.

### Brief description of drawings

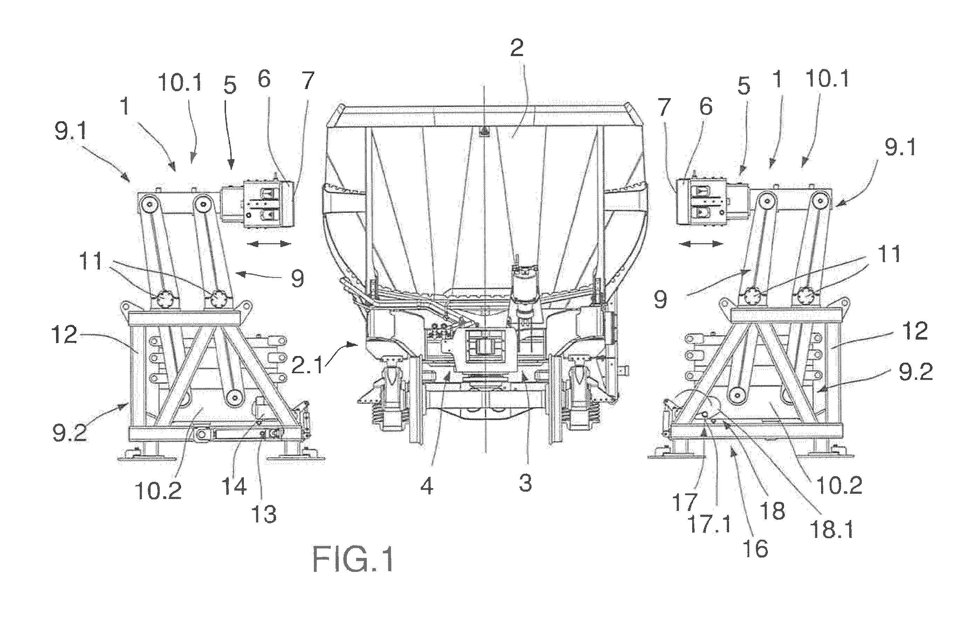

**Figure 1** is showing a truck and an arrangement according to the invention arranged on each side of a truck,
   in a locked parked condition.

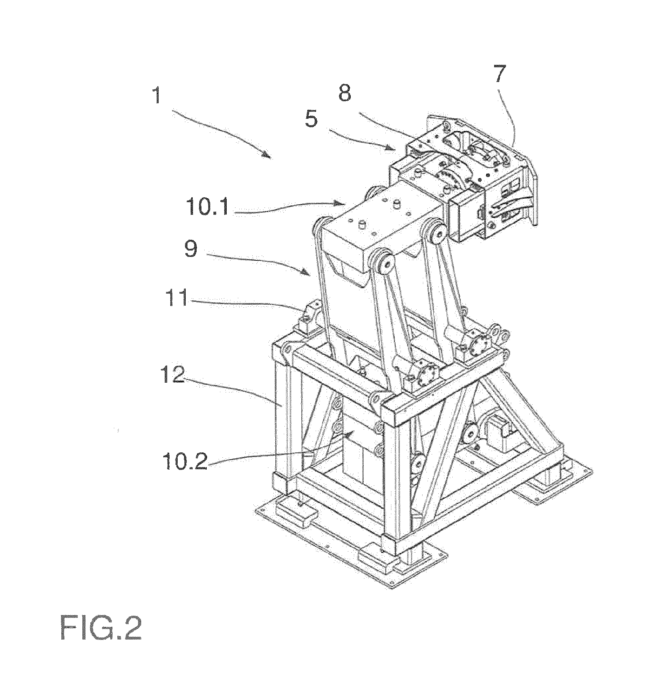

**Figure 2** is showing an arrangement according to the invention seen at an oblique perspective, in a locked condition.

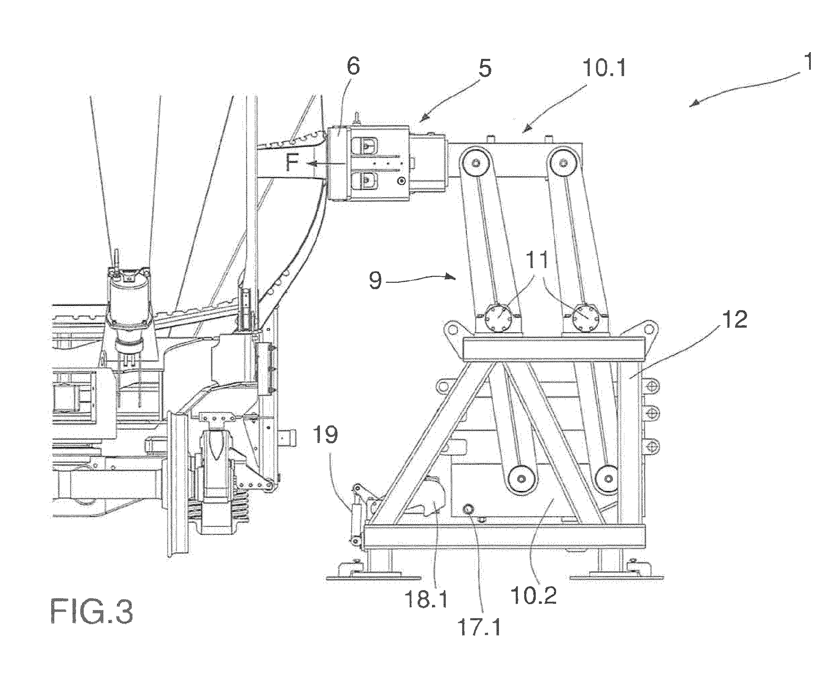

**Figure 3** is showing an arrangement according to the invention in its working condition.

### Detailed description of embodiments

This invention concerns an arrangement 1 to be used for the unloading of goods that are transported in a truck. The goods are in a solid form, but are so finely divided that they can be experienced as flowing out from the truck 2. Such goods are known as "bulk goods". The truck 2 is driven forwards on a surface, for example along tracks. The truck comprises an opening 3 that is provided with a door 4 that can be opened and closed.

The opening 3 of the truck, provided with a door arrangement 4, is located at the lower surface of the truck, at its bottom 2.1, and makes it possible to empty the truck 2 at the bottom. When the door arrangement 4 is opened, the load in the truck, the goods, falls out from the truck 2, downwards out from the truck 2. Trucks that are unloaded through an opening at the bottom of the truck are normally used when the goods are constituted by bulk goods that can be unloaded through their free fall from the lower surface of the truck.

The invention has been developed principally for this type of truck, but it can be used also for other types of truck. A truck may, for example, comprise an opening arranged at the upper surface of the truck, or at a wall section of the truck. This is not shown in the drawings, since the invention does not concern the trucks in themselves: these are of prior art design. An opening located in this manner may be provided also with a door arrangement that can be opened and closed. This location of the opening, and of the door arrangement, makes possible the emptying of the truck through its top or its side. At least one of the truck, or a part of the truck (such as a goods container comprising the opening), and the opening may have its condition changed, swivelled, rotated, tipped, such that the opening is located during the actual unloading operation such that the load of the truck, the goods, can fall out of the truck, downwards out from the truck, through the opening, just as occurs during emptying through its bottom.

The arrangement 1 according to the invention is **characterised in that** it comprises at least one unit 5 that creates vibration and that influences the truck 2, shakes, vibrates, the truck 5, when the door arrangement 4, where such has been fitted, of the truck 2 is opened. The invention concerns an arrangement 1 that can be used to vibrate, shake the truck, such that parts of the goods are released from other goods, and also released from the truck; and this may be desirable also for other types of truck with other locations of an opening than just at the bottom. The vibration facilitates the unloading of the goods such that it becomes possible to achieve fully empty and clean trucks, truck cars, after the unloading has been completed.

The arrangement 1 comprises a control system, not explicitly shown in the drawings, that controls in a previously known manner the work operations that the arrangement 1 carries out, and that acts on the various parts that can be controlled and monitored. The unit 5 that creates vibration may act on the truck 2 at the moment at which the door arrangement 4 is opened, or it may have either an earlier or a later time at which it starts working. The unit 5 that creates vibration may continue to operate on the truck during the complete period during which the door arrangement 4 is open in order subsequently to be terminated, switched off, when the door arrangement 4 is closed. The vibration may also be terminated, switched off, for various reasons at a pre-determined time before the door is closed or after the door has been closed, and either before or after the arrival of the truck at an arrangement according to the invention.

The unit 5 that creates vibration comprises a part 6 that comprises a surface 7 directed towards the truck 2, which surface is brought into a working position in contact with the truck 2 and is caused to vibrate against the truck 2.

The unit 5 that creates vibration comprises also a pressurised air unit 8 that acts on the part 6, the surface 7, that is into contact with the truck 2 and causes the surface part to vibrate against the truck 2. The pressurised air unit 8 comprises a piston, not shown in the drawings, that is influenced by the pressurised air in such a manner that it is displaced in a reciprocating motion, a pulsating motion, against the truck 2.

The arrangement 1 according to the invention comprises a pendulum, link, system 9, at one end 9.1 of which the unit 5 that creates vibration and a first counterweight 10.1 are attached, and at the second end of which a second counterweight 10.2 is attached, being principally a counterweight to the unit 5 that creates vibration. The pendulum system 9 is balanced around a point 11 of rotation comprised in the arrangement 1. The balancing operation and the rotation that is associated with it take place in such a manner that when the unit 5 that creates vibration is in its working position and is in contact with the truck 2 and influences it, the second counterweight 10.2 is displaced in the opposite direction, away from the truck 2.

The pendulum system 9 thus comprises the unit 5 that creates vibration, the first counterweight 10.1 and the second counterweight 10.2. The pendulum system 9 has a relatively specific distribution of weight, in order to function in an optimal manner. The distribution of weight between the unit 5 that creates vibration, the first counterweight 10.1 and the second counterweight 10.2 is approximately 1:2:8. This distribution of weight ensures that the object that is to vibrate, the truck 2, will be able to vibrate without the vibration being transferred to the arrangement 1 itself.

The point 11 of rotation is comprised within a frame 12 that is comprised within the arrangement 1. The unit 5 that creates vibration can be displaced in space relative to the frame 12 towards and away from the truck 2, with the aid of the pendulum system 9.

The arrangement 1 comprises a displacement unit 13 that applies a force to the pendulum system 9 such that the unit 5 that creates vibration achieves its working position and thus comes into contact with the truck 2.

The arrangement 1 comprises a displacement unit 13 that applies a force to the pendulum system 9 such that the unit 5 that creates vibration is displaced from its working position to an intermediate position, an inactive position, after unloading of the truck 2 has been completed, waiting for the next truck.

The arrangement 1 comprises a displacement unit 13 that applies a force to the pendulum system 9 such that the unit 5 that creates vibration is displaced from its intermediate position, the inactive position, to a parked position, to a locked parked position, after vibration of the truck 2 or of the trucks, if several coupled trucks in a complete train set pass, has been completed.

The same displacement unit 13 is used for all displacement of the unit 5 that creates vibration in the design of the invention that is shown in the drawings.

The displacement unit 13 is located under the counterweight 10, coupled to the frame 12 and the counterweight 10 such that it acts between the frame 12 and the counterweight 10, and it comprises a cylinder/piston unit 14, a hydraulic cylinder. The working medium is a fluid under pressure, a liquid fluid, most often a hydraulic oil, but it may also be ordinary water or a gaseous fluid such as air.

It is appropriate that the arrangement 1, the unit 5 that creates vibration, comprise a valve 15 with which it is possible to regulate the force F of contact between the unit that creates vibration and the truck.

The arrangement 1 comprises a lock arrangement 16 that acts on the unit 5 that creates vibration when the unit 5 that creates vibration comes into, is located in, a parked position such that the unit 5 that creates vibration cannot come into contact with a truck 2, or anything else that is located in front of the vibrating surface of the unit that creates vibration in an uncontrolled manner or at an undesired time.

Such a lock arrangement 16 acts on the pendulum system 9, on the counterweight 10.2, when the unit 5 that creates vibration comes into, is located in, a parked position.

A lock arrangement for this purpose may also act directly on the unit 5 that creates vibration or on some other part of the pendulum system 9, and offer the same locking of the displacement of the unit 5 that creates vibration towards and away from a truck 2.

The lock arrangement 16 comprises at least a first part 17 comprised within the pendulum system 9, in the counterweight 10.2, and a second part 18 that is independent of the unit 5 that creates vibration, fixed arranged in the surrounding space, appropriately in the frame 12, and where the two parts 17 and 18 interact and lock each other into position, restricting in this way the ability of the unit that creates vibration to move.

The lock arrangement 16 has a design in which the first part 17 comprises at least one protruding part 17.1 around which a hooked part 18.1, comprised within the second part 18, is attached by hooking. The hooked part 18.1 is under the effect of a force from a displacement arrangement 19 between a position in which the hooked part 18.1 enters into interaction with the protruding part 17.1 and a position at which the hooked part 18.1 is not in interaction with the protruding part 17.1.

The lock arrangement 16 comprises one or several sensors, not shown in the drawings, that indicate the positions of the two parts 17 and 18, or of just one of them, and control the lock arrangement 16. One or several sensors may control also the function of the displacement arrangement. The sensor is not activated when the lock arrangement 16 is open, and it is activated when the lock arrangement 16 is in its locked position.

The arrangement 1 according to the invention comprises, for its most advantageous operation, two units 5 that create vibration located one on each side of the truck 2. Monitoring and control of the units 5 that create vibration take place individually or in a synchronised manner pairwise, or both individually and in a synchronised manner pairwise, for all units along the truck and these units are controlled by one control and regulatory system, not shown in the drawings.

An arrangement 1 according to the invention may be anchored in an appropriate manner to the base, for example by the use of chemical anchors in a concrete floor.

An arrangement 1 according to the invention is used for the unloading of at least one truck 2 that is in motion, rolling, for example, along rails. The unloading is carried out while the truck is, or the trucks are, in motion, on occasions with reduced speed. It is possible also that at least two trucks 2 are coupled to each other and that they are to be emptied, unloaded, one after the other. An arrangement 1 according to the invention has been primarily developed for the unloading of ore pellets, but it can be used also for the unloading of other products. The most specific use of the arrangement is the unloading of ore pellets.

An arrangement 1 according to the invention constitutes a permanent function for the vibration of trucks for the unloading in motion of at least one truck, and it replaces a prior art percussive machine or impact mechanism. An arrangement 1 according to the invention may also be supplemented or it may be used as a supplement to a prior art percussive machine, and this gives good results. An arrangement 1 according to the invention may be combined also with an arrangement intended for deicing.

When an arrangement 1 according to the invention has been mounted and set in motion for its use, the units 5 that create vibration are driven in towards the rolling truck 2, the truck car, with the aid of the displacement unit 13. Integral position sensors, not shown in the drawings, in the cylinders indicate the position. During the motion of the units that create vibration towards the truck 2, the pressurised air unit 8 is connected and influences the relevant surface 7 of the unit that creates vibration, which surface is in contact with the truck 2, and causes the surface part 7 to vibrate against the truck 2. The pressure against the truck 2 is regulated by a valve, not shown in the drawings. After the vibration of an individual truck 2 has been completed, the units 5 that create vibration are driven back to their intermediate positions while waiting for the next truck. Once vibration of the complete train set has been completed, the units 5 that create vibration are driven back to their parked positions, where they are automatically locked by the parking lock, the lock arrangement 16.

## Claims

1. An arrangement (1) to be used during the unloading of goods that are transported in a truck (2) that is emptied through at least one opening (3) in the truck (2), **characterised in that** the arrangement (1) comprises at least one unit (5) that creates vibration and that influences the truck (2).

2. The arrangement (1) according to claim 1, where the unit (5) that creates vibration comprises a part (6) that comprises a surface (7) directed towards the truck, which surface is brought in a working mode into contact with the truck (2) and that is caused to vibrate against the truck (2).

3. The arrangement (1) according to claim 2, where the unit (5) that creates vibration comprises a pressurised air unit (8) that acts on the part (6) and the surface (7) that comes into contact with the truck (2) and causes the surface (7) to vibrate against the truck (2).

4. The arrangement (1) according to any one of claims 1-3, comprising a pendulum system (9) at one end (9.1) of which are attached the unit (5) that creates vibration and a first counterweight (10.1) and at the second end (9.2) of which is attached a second counterweight (10.2) to the unit (5) that creates vibration, and where the pendulum system (9) is balanced around a point (11) of rotation comprised in the arrangement (1) in such a manner that when the unit (5) that creates vibration is in its working position and is in contact with and influences the truck (2) the second counterweight (10.2) is displaced in the opposite direction and the vibration is prevented from being transferred to the arrangement (1).

5. The arrangement (1) according to claim 4, where the point (11) of rotation is comprised in a frame (12) comprised in the arrangement (1).

6. The arrangement (1) according to claim 4 or 5, comprising a displacement unit (13) that applies a force to the pendulum system (9) such that the unit (5) that creates vibration achieves its working position and thus comes into contact with the truck (2).

7. The arrangement (1) according to any one of claims 4-6, comprising a displacement unit (13) that applies a force to the pendulum system (9) such that the unit (5), that creates vibration is displaced from its working position to an intermediate position, an inactive position.

8. The arrangement (1) according to any one of claims 4-7, comprising a displacement unit (13) that applies a force to the pendulum system (9) such that the unit (5) that creates vibration is displaced from its intermediate position, the inactive position to a locked parked position.

9. The arrangement (1) according to claims 6-8, where one and the same displacement unit (13) is used for all displacement of the unit (5) that creates vibration.

10. The arrangement (1) according to any one of claims 4-9 where the displacement unit (13) is located under the counterweight (10), coupled with the frame (12) and the counterweight (10) such that it acts between the frame (12) and the counterweight (10), and applies a force to the pendulum system (9), and thus to the unit (5) that creates vibration.

11. The arrangement (1) according to any one of claims 6-10 where the displacement unit (13) comprises a cylinder/piston unit (14).

12. The arrangement (1) according to any one of claims 1-11, comprising a lock arrangement (16) that acts directly on the unit (5) that creates vibration when the unit that creates vibration takes up, is located in, a parked position.

13. The arrangement (1) according to any one of claims 1-11, comprising a lock arrangement (16) that acts indirectly on the unit (5) that creates vibration when the unit (5) that creates vibration takes up, is located in, a parked position.

14. The arrangement (1) according to claim 13, where the lock arrangement (16) acts on the pendulum system (9).

15. The arrangement (1) according to claim 13, where the lock arrangement (16) acts on the counterweight (10.2).

16. The arrangement (1) according to any one of claims 1-15, where at least two units (5) that create vibration are located one on each side of the truck (2).

17. The use of an arrangement (1) according to any one of claims 1-16 for the unloading of at least one truck (2) that is in motion, for example, rolling along rails.

18. The use according to claim 17, where at least two trucks (2) are coupled to each other and are to be emptied, one after the other.

19. The use of an arrangement (1) according to any one of claims 1-18 for the unloading of ore pellets.

20. The use of an arrangement (1) according to any one of claims 1-19 for the unloading of goods that are transported in a truck (2) and emptied through an opening (3) in the truck (2), where the opening (3) of the truck is arranged at the bottom (2.1) of the truck.

21. The use of an arrangement (1) according to any one of claims 1-19 for the unloading of goods that are transported in a truck (2) and emptied through an opening (3) in the truck (2), where the opening (3) is arranged at the upper surface or a side wall section of the truck (2).

22. The use of an arrangement (1) according to claim 21 where the location of the opening is changed through the truck (2), or a part of the truck (2), having its position changed such that the opening (3) becomes directed principally downwards during the unloading of the truck (2).
